# EUROPEAN PATENT SPECIFICATION

(11) **EP 1 962 120 B1**
(45) Date of publication and mention of the grant of the patent: **20.11.2013**
(21) Application number: 06824208.0
(22) Date of filing: 20.10.2006
(51) Int. Cl.: G02B 6/032, G02B 6/02

(54) **METHOD FOR MONITORING STRAIN USING A TAPERED MICROSTRUCTURED OPTICAL FIBER**
VERFAHREN ZUR DEHNUNGSÜBERWACHUNG UNTER VERWENDUNG EINER VERJÜNGTEN MIKROSTRUKTURIERTEN OPTISCHEN FASER
PROCEDE DE SURVEILLANCE DE DEFORMATION UTILISANT UNE FIBRE OPTIQUE MICROSTUCTUREE REDUITE EN TAILLE

(30) Priority: 15.11.2005 MX GT05000015
(43) Date of publication of application: 27.08.2008
(73) Proprietor: Centro de Investigaciones en Óptica, AC, 37150 León, Guanajuato (MX)
(72) Inventor: Minkovich, Vladimir, Leon Guanajuato 37150 (MX); Villatoro Bernardo, Augustin Joel, El Vendrel Tarragona (ES); Monzon Hernandez, David, Leon Guanajuato 37150 (MX)
(74) Representative: Elzaburu Marquez, Alberto
(86) International application number: PCT/MX2006/000114
(87) International publication number: WO 2007/058518

(56) References cited:
- EP-A1- 1 199 582
- WO-A1-01/31376
- MINKOVICH V.P. ET AL.: 'Holey fiber tapers with resonance transmission for high-resolution refractive index sensing' OPTICS EXPRESS vol. 13, no. 19, 19 September 2005, pages 7609 - 7614, XP003013117
- VILLATORO J. ET AL.: 'Temperature-independent strain sensor made from tapered holey optical fiber' OPTICAL LETTERS vol. 31, no. 3, 01 February 2006, pages 305 - 307, XP001238967
- VILLATORO J. ET AL.: 'Compact modal interferometer built with tapered microstructure optical fiber' IEEE PHOTONICS TECHNOLOGY LETTERS vol. 18, no. 11, 01 June 2006, pages 1258 - 1260, XP003013118

## Description

### Summary

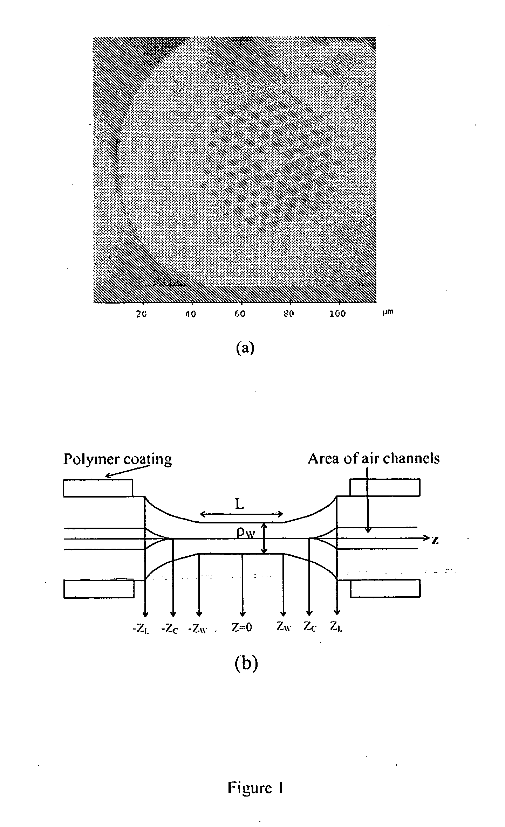

According to the first aspect, reflected in Fig. 1(b), a nonadiabatic tapered single material MOF structure with collapsed air holes is disclosed. For the fabrication of the structure MOFs are used, which consist of a pure silica core surrounded by pure silica cladding with a regular array of air holes that run inside the cladding along the length of the fiber. The holes are also arranged in a hexagonal structure around the core, see Fig. 1(a). For example, a large-core single-mode MOF, with a few rings of air-holes in the cladding that is described in more detail in [12] and shown in Fig. 1(a), can be used. The nonadiabatic tapered single material MOF structure [see Fig. 1 (b)] consists of untapered holey fibers at *z* < -*Z_{L}* and *z* > *Z_{L}*, one compression region *-Z_{L}* to -*Z_{W}*, an expansion region *Z_{W}* to *Z_{L}*, and a cylindrical waist region of constant diameter -*Z_{W}* to *Z_{W}*. In the region -*Z_{C}* to *Z_{C}*, the air holes are fully collapsed, then that region is totally solid. The transmission spectrum of the taper exhibits a series of peaks. Such interference peaks are sensitive to the external environment and that allows using our invention as a sensor for measuring many parameters.

According to the second aspect, a manufacturing process for nonadiabatic tapered single material MOF structure with collapsed air holes is also disclosed. The gradual collapsing of the holes is achieved by tapering the fibers with a "slow-and-hot" method. This nonadiabatic process makes the fundamental mode of the holey fiber to couple into multiple modes of the solid waist of the tapered fiber. Owing to the beating between the multiple modes the transmission spectra of the tapered holey fibers exhibit several interference peaks

With these aspects, it is possible to use the disclosures as a high precision sensor for refractive index [13], micro-stresses regardless of temperature (up to 180°C) [14], , and high temperatures (up to 1000°C) [16]. It can be also used for sensing many others parameters [17, 18].

### Novelties, characteristics and applications

Large-mode-area single material holey fiber tapers with collapsed by nonadiabatic process air holes in the waist for fiber optic sensors and a method for manufacturing these tapers are disclosed. The gradual collapsing of the holes is achieved by tapering the fibers with a "slow-and-hot" method. This nonadiabatic process makes the fundamental mode of the holey fiber to couple to multiple modes of the solid taper waist. Owing to the beating between the modes, the transmission spectra of the tapered single material holey fibers exhibit several interference peaks. The multiple peaks, combined with a fitting algorithm, allow high-accuracy refractometric measurements, temperature-independent strain measurements, measurements of high temperature and may be used for measuring many others parameters.

### Background of the invention

The present disclosure relates to fiber optic devices using air-silica microstructured optical fibers (MOFs), also known as photonic crystal or holey fibers (MOFs), which consist of a single material. The MOF is a new class of optical fibers with non-conventional propagation characteristics that have been widely investigated. MOFs consist of a pure silica core surrounded by pure silica cladding with a regular array of air holes that run inside of the cladding along the length of the fiber and are arranged in a hexagonal structure around the core [1,2]. MOFs are characterized in terms of hole size and hole spacing. The holes are usually periodically spaced, the period being called "pitch", Λ. The holes are usually circular and are characterized by a diameter, *d*.

The holey structure of a MOF enables new possibilities for optical sensing, as it provides an efficient method to exploit the interaction of the guided light with different gases, liquids, or biological samples present in the holes [3-6]. The advantage of this alternative is that the fiber itself can work as a micro-chamber. In addttion, some parameters, such as the size of the holes, the separation between holes, etc., can be optimized to improve the overlap between the parameter to be sensed and the mode field [7, 8]. To use an MOF as a sensor, using the above alternative, one has to fill the holes with the sample in question, for example a gas or liquid, and then the analysis or detection is carried out. In some situations, such a process may be inconvenient or impractical. That is why two new approaches have recently been proposed for sensing with a special "grapefruit" microstructured fiber. One of them consists of adiabatic ("fast-and-cool" method) tapering the fiber, preserving the structure, to a point in which the doped core has subwavelength diameter [9]. The other alternative consists of adiabatic tapering the fiber with doped core and collapsing the air holes over a localized region [10, 11]. In both cases the special "grapefritit" microstructured fibers with doped core are used and the tapenng process is adiabatic, i.e., the taper does not induce coupling between modes.

The adiabatic tapering process makes the guided mode of the fibers to spread out.

In contrast to the above disclosures, a nonadiabatic tapered,single material MOF structure with gradually collapsed air-holes that causes the transmission spectrum of the taper to exhibit several interference peaks is also disclosed. Shifts of the peaks under the action of different external parameters allow one to use the invention as a sensor for the measurements of many magnitudes for diverse applications. The manufacturing process; providing the nonadiabific tapered single material MOF structure with collapsed air holes is also different from the known to-date.

The author, Vladimir P. Minkovich et al, in "Holey fiber tapers with resonance transmission for high-resolution refractive index sensing", Optics Express, vol. 13, no. 19, 19 September 2005, pages 7609-7614, disclosed tapered holey fibers with collapsed air holes for refractive index sensing. This sensor allows high-accuracy refractometric measurements which can be used for diverse applications.

EP 1 199 582 A1 discloses a process for fabricating tapered microstructured fiber system and the resultant system. In this process, a portion of the fiber is treated by heating and stretching to modify it along the propagation direction, so that the outer diameter of the fiber gets smaller.

WO 01/31376 discloses a fiber optic waveguide including a core region and a cladding region surrounding the core region. The inner cladding region has a lattice of ring structures. The core region is formed from a high index material and the cladding region is formed from materials producing an effective refractive index lower than the refractive index of the core region.

### Brief description of drawings

**Figure 1**(a) shows across section of the cleaved end of an MOF. Fig. 1(b) is an illustration of a uniform-waist tapered fiber, fabricated with nonadiabatic process, embodying the first aspect of the disclosure. The outside diameter of this MOF is 125 µm and the relative hole diameter is *d*/Λ=0,5. The variables that appear in Figure 1 (b) are discussed in the text. *z* is the propagation direction.
**Figure 2** shows photographs taken with an atomic force microscope (AFM) of three MOFs tapered with diameters of 50 µm (a), 39 µm (b), and 31 µm (c). The scan sizes of the AFM linages are, respectively, 13.3, 11.9, and 3.8 µm.
**Figure 3** shows the normalized transmission spectra of three MOFs tapered with waist diameter ρ_{w} of 28µm(a), 20µm (b), and 15µm (c). L= 3mm.
**Figure 4** shows the normalized transmission spectra of three MOFs tapered with the waist diameters ρ_{w} of 28µm (a), 20µm (b), and 15µm (c). L = 10mm.
**Figure 5** illustrates the normalized transmission spectra of three MOFs tapered with the waist diameters of 25µm (a) and L = 8 mm in different wavelength ranges.
**Figure 6** illustrates the normalized transmission spectra (left) and position of the maxima of the peak or peaks (right) as a function of the external refractive index of three MOFs tapered with the waist diameters of 39 (top plots), 31 (middle plots) and 20 µm (bottom plots). L = 5mm for all cases. The peaks are numbered to show the shift to longer wavelengths they suffered when the external index changes.
**Figure 7** shows the normalized transmission spectra of the single material MOF before (dotted line) and after (continuous line) nonadiabatic tapering. The taper waist diameter is 28 µm and L = 5mm.
**Figure 8 (a) and 8 (b)** shows the normalized transmission spectra of a MOF tapered with the waist diameter of 28 µm and L = 5mm under strain 0 µε (black lane), 1100 µε (red line), and 2200 µε (blue line) measured by using tvvo LED With central wavelengths 1540 nm (a) and 1290 nm (b), respectively.
**Figure 9** presents a typical shift of the peaks in Fig. 8 (peaks near wavelengths 1520 nm and 1250 nm) as a function of the applied strain.

### Detailed description of the invention

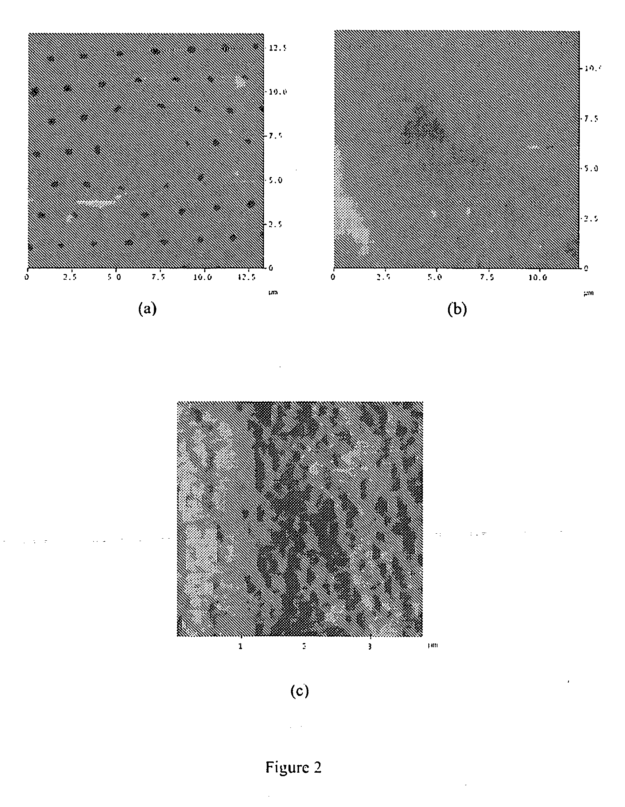

Fig. 1 shows a cross section of the cleaved end of a single material MOF, as well as schematic representation of the taper fabricated with nonadiabatic process embodying the first aspect of the disclosure. The fiber employed to fabricate the tapers may be a large-mode-area single-mode, made from single material MOF with a solid core surrounded by hexagonal rings air holes in the cladding. The fabrication and properties of one type of such single material MOFs are described in detail in [12], for example. The MOF structure [see Fig. 1 (b)] consists of two untapered holey fibers at *z<-Z_{L}* and *z* > *Z_{L}*, one compression region *-Z_{L}* to *-Z_{W}*, one expansion region *Z_{W}* to *Z_{L}*, and a cylindrical waist region -*Z_{W}* to *Z_{W}* of constant diameter ρ_{w} and length L. In region -Z_{C} to Z_{C} the air holes are fully collapsed. In Figures 2(a), (b), and (c) we show, respectively, AFM images of tapers with waist diameters ρ_{w} of 50, 39, and 31 µm. The photographs were taken after cutting the tapered fibers in z=0. It can be seen in the photographs that in the 50 and 39 µm-thick tapers the air holes are still present. It is worth noting that the smgle material holey structure in both tapers is also preserved. In the 30 µm-thick taper, however, the holes are totally collapsed and the holey structure cannot be distinguished. In this case, part of the tapered section of the single material MOF becomes a solid silica fiber (with infinite cladding) which can support multiple modes.

As one can see from Fig. 1(a) the cladding of the untapered MOF consists of several rings of air holes arranged in hexagonal pattern. It is possible to use the single material MOF with 125 µm outside diameter (the outer diameter of a typical communications fiber), with a solid core of 11 µm in diameter, with average hole diameter d of of 2.7 µm, and with an average hole spacing, or pitch, Λ, of 5.45 µm. A variety of suitable microstructures of the MOF cladding is possible and is known in the art Air holes, of a variety of shapes and configurations, ate generally useful.

According to the second aspect, a manufacturing process for a nonadiabatic tapered single material MOF structure with gradually collapsed air holes is also disclosed. To obtain the structure it is possible to insert, the MOF into a standard single-mode fiber by fusion splicing both fibers. This allows one to use short length of the MOF. Then the MOF is placed into an apparatus, in which a section of the fiber is heated at a high temperature and then it is slowly stretched. Under these conditions a nonadiabatic tapered single material MOF structure is obtained and in the region the air holes are fully collapsed. For example, the outside diameter of the cylindrical waist region of the taper is reduced four times in comparison to the initial outside diameter of the MOF. A variety of tapering machines are known in the art. An oscillating high-temperature flame torch is preferable because it can provide the needed short and hot zone of heating.

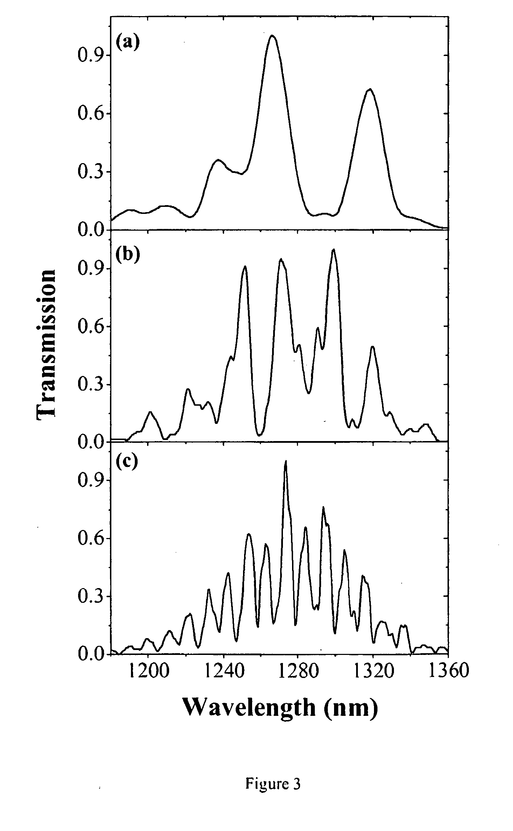

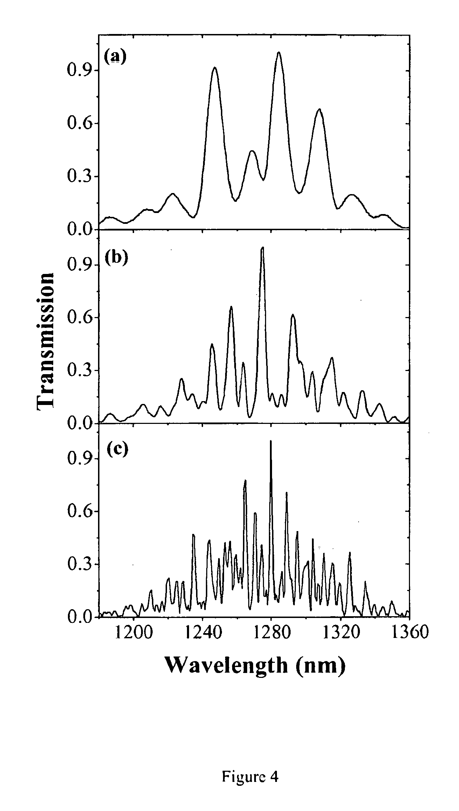

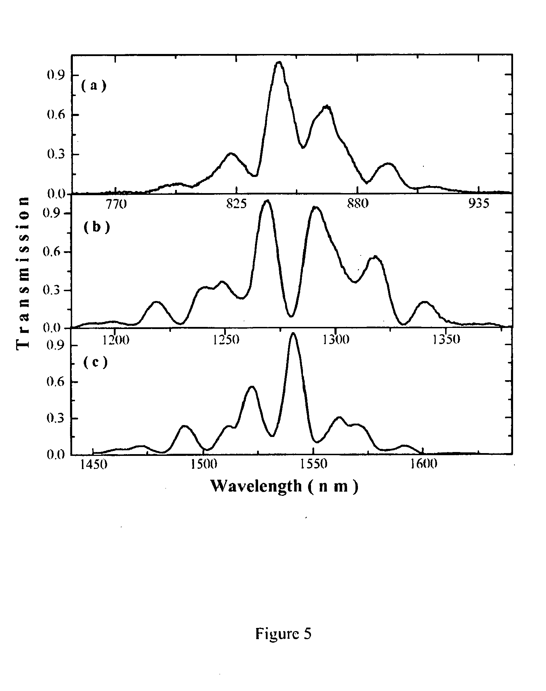

With these aspects, the transmission spectra of such tapers exhibit multiple interference peaks (see Fig. 3, 4 and 5 for example). Fig. 3 shows that, for a fixed L, the number of interference peaks increases, and that the peaks become narrower when ρ_{w} decreases. Fig. 4 shows that, for a fixed ρ_{w}, if L increases the number of peaks also increases and they become narrower. The interference peaks show different wavelengths, from 800 to 1600 nm, as shown in Fig. 5. In the inventors' reference [15] it was provided a detail theoretical investigation of the transmission properties of the nonadiabatic tapered large core single-mode, made from single material MOF with gradually collapsed air holes. It was shown that the multiple interference peaks at the taper output appeared owing to interference between several modes in the taper waist. Such interference peaks are sensitive to the external environment since the propagation constants of the: modes depend on it. The nonadiabatic tapered single material MOF behaves like a modal Mach-Zehnder interferometer since the interference between the multiple modes occurs owing to the different optical paths traveled by the modes along the taper. The multiple peaks, combined with a fitting algorithm, allow high-accuracy temperature-independent refractometric measurements, temperature-independent strain measurements [15], as well as measurements of high temperature. They can also be used for the measurement of many others physical or chemical parameters.

### Example 1

The fiber employed to fabricate the tapers was a large core single-mode, made from single material, MOF with a solid silica core surrounded by a few air holes in the cladding. The fabrication and properties of such a fiber are described in detail in [12]. As one can see from Fig. 1(a) the untapered single material MOF consists of four full rings of air holes in hexagonal pattern (the fifth ring is partially collapsed). The outer diameter of the MOF is 125 µm, the diameter of the solid core is 11 µm, the average hole diameter *d* is 2.7 µm, and the average hole spacing, or pitch, Λ is 5.45 µm. To obtain a nonadiabatic tapered single material MOF structure we first inserted the MOF into a standard single-mode fiber by fusion splicing both fibers. This allowed us to seal the ends of the MOF. The length of the MOF was chosen to be about 30 cm. Then the MOF is slowly stretched while it was being heated with an oscillating high-temperature flame torch. The temperature of the flame was approximately 1000°C. The length of oscillation of the torch, and also the length of the uniform waist (-Z_{W} to +Z_{W}) of the taper, [see Fig 1(b)], was set to 5 mm. The pulling mechanism involves two sliding stands individually driven by stepper motors. The speed of each stand was approximately 2.0 mm/min. A tapered MOF is obtained with this process, wherein the central zone or waist becomes a solid silica fiber (with infinite cladding) which can support multiple modes. However, not all the modes are necessary excited. The beating between the multiple modes of the solid section of the taper give rise to multiple interference peaks.

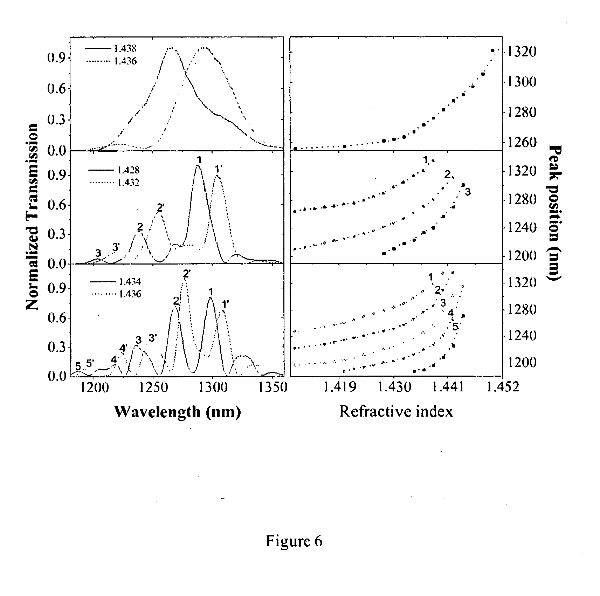

To analyze the transmission spectra of the tapers a simple light transmission measurement setup consisting of a low power light emitting diode (LED), with peak emission at 1290 nm and 80 nm of spectral width, and a high-resolution optical spectrum analyzer was implemented. The measured transmission spectra of three tapered single material MOFs in air are shown in Fig. 6. The waist diameters ρ_{w} of the tapered fibers, from top to bottom of Fig. 6, are, respectively, 39, 31, and 20 µm. The three spectra were normalized with respect to the maxima of the highest peaks. It can be noted from the figure that the spectrum of the taper with ρ_{w}=39 µm, in which air holes are not collapsed, see Fig. 2(b), is basically the output spectrum of the LED. However, the spectra of the tapers with waist diameter of ρ_{w}=31 and ρ_{w}=20 µm, in which air holes are gradually collapsed, exhibit a series of peaks. The number of peaks increases as the diameter of the taper is reduced. Fig. 6 also shows the transmission spectra and the position of the maxima of the peaks as a function of the external refractive index for three tapered single material MOFs with the waist diameters of 39, 31, and 20 µm. One can see from this figure that all interference peaks shift to longer wavelengths as the external index augments. The shift of the peaks is more remarkable for indexes higher than 1.440. In that range of indexes the estimated maximum resolution of the sensor was found to be around 1x10⁻⁵, considering that the resolution of the used spectrum analyzer was 2 nm. Note also from the figure that the intensity of the peaks changes with the index, but their shape remains constant.

One interesting feature of nonadiabatical tapering a single material MOF with a "slow-and-hot" method is that the interference peaks can be monitored during the tapering process. Thus, one may stop the process when the desirable numbers of peaks are obtained. It was observed that the interference peaks were insensitive to temperature (in the range 0-180°C). This property is important since temperature compensation, -a familiar problem in optical sensors, - is not necessary for sensors based on tapered MOFs with gradually collapsed air holes. Another interesting feature of the tapers is the multiple interference peaks themselves. All such peaks can be used simultaneously to monitor the refractive index of the medium surrounding the taper. It is not difficult to show [15] that the use four peaks instead of one may improve the accuracy of the measurements by factor of two.

### Example 2

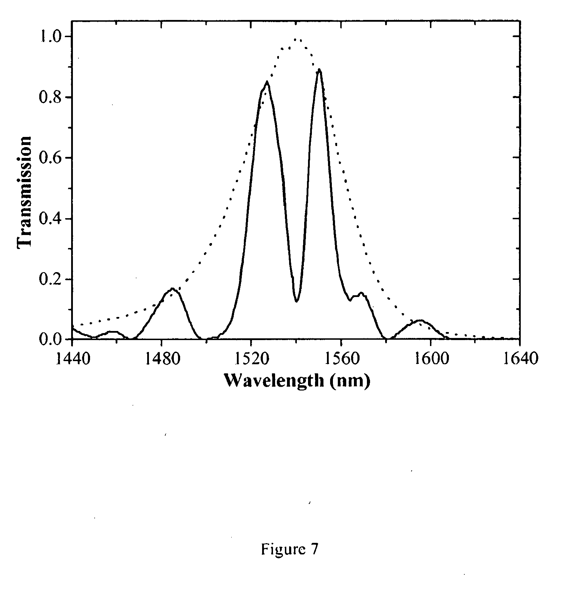

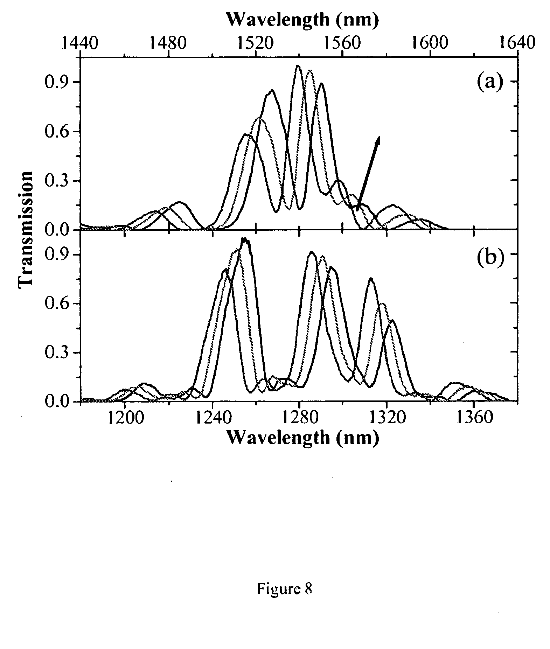

By using the same fiber, and the same tapering process as in example 1, a single material MOF taper with waist diameter ρ_{w}=28 µm and *L*=5mm was fabricated. Fig. 7 shows the normalized transmission spectra of the MOF before (dotted line) and after (continuous line) the nonadiabatic tapering process. The measurements were carried in a measuring setup consisting of a LED, with peak emission at 1540 nm and 40 nm of spectral with, and an optical spectrum analyzer with resolution of 0.1 nm. It is possible to see from the figure that the transmission of the untapered single material MOF is basically the output spectrum of the LED. However, the spectrum of the 28 µm-thick taper exhibits a series of peaks, two of which are higher than the others. For this taper it was investigated the shift of the interference peaks caused by longitudinal strain. The MOF was fixed between two displacement mechanical mounts, with the tapered section in the middle. Then the fiber was stretched using the calibrated micrometer screws of the mounts. Fig. 8(a) shows the normalized spectra, measured at 1540 nm, of the taper when subjected to 0, 1100, and 2200 µε. When the strain was removed to the sensor all the peaks returned to their baseline. At this point, the LED was changed by another with peak emission at 1290 nm and repeated the experiments. The results are shown in Fig. 8(b). From this figure one can see that the transmission spectrum of the device also exhibits interference peaks around 1290 nm, and that such peaks also shift to shorter wavelength as the taper is elongated. Note that the height of some peaks increases and that others decreases. All peaks, however, maintain almost the same shape. The influence of temperature on the peaks was also investigated. The taper subjected to 0 µε was exposed to different temperatures between 0 and 180 °C. In that range of temperatures the interference peaks did not suffer any shift, but at higher temperatures, the peaks shifted to longer wavelength. Hence, a nonadiabatically tapered single material holey fiber with gradually collapsed air holes can be used for temperature-independent strain sensing. The advantage of the sensor is that one can monitor one or all the peaks. In addition, different wavelengths can be used to interrogate the sensor.

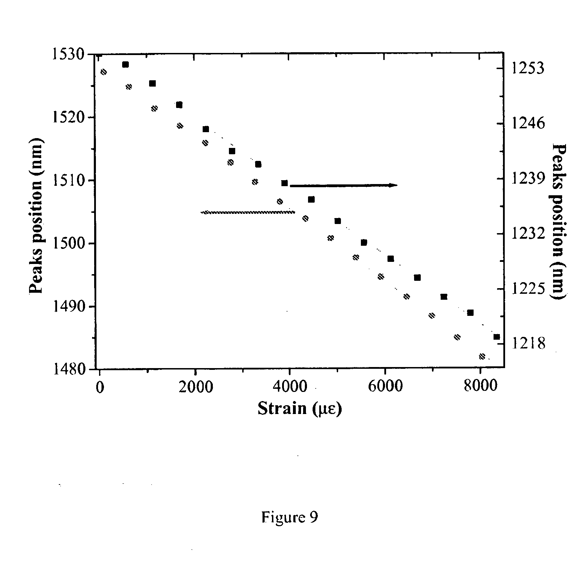

Fig. 9 shows the shift as a function of the applied strain of the interference peaks centered around 1520 and 1250 nm of Figs. 8(a) and 8(b), respectively. The observed shift of both peaks has a linear behavior and the slope of both lines is basically the same. The observed shift of the other peaks shown in Fig. 8 had also a linear behavior with similar slope to the ones of the plots of Fig. 9. The experiments were carried out several times, observing in all cases that the sensor was reversible in the 0-8000 µε range. Prior art fiber-based strain sensor devices suffer a cross-sensitivity to temperature. Thus, the sensor on a basis of the proposed MOF taper exhibits a linear response, it is temperature independent, reversible, and can operate at different wavelength. It can be incorporated into civil and spacecraft structures, smart materials, active devices and components, etc. to monitor the strain-induced changes suffered by such structures, materials or components.

### References

1. P. St. J. Russell, "Photonic crystal fibers," Science, 299, 358-362 (2003).
2. A. Bjarklev, J. Broeng, and A. S. Bjarklev, Photonic Crystal Fibres (Kluver Academic Publishers, Boston, 2003).
3. T. M. Monro, W. Belardi, K. Furusawa, J. C. Bagget, N. G. R. Broderick, and D. J. Richardson, "Sensing with microstructured optical fibers," Meas. Sci. Technol., 12, 854-858 (2001).
4. J. M. Fini, "Microstructure fibres for optical sensing in gases and liquids," Meas. Sci. Technol., 15, 1120-1128 (2004).
5. S. O. Konorov, A. Zheltikov, and M. Scalora, "Photonic-crystal fiber as a multifunctional optical sensor and sample collector," Opt. Express. 13, 3454-3459 (2005).
6. J. B. Jensen, P.E. Hoiby, G. Emiliyanov, O. Bang, L. H. Pedersen, and A. Bjarklev, "Selective detection of antibodies in microstructured polymer optical fibers,"Opt. Express, 13, 5883-5889 (2005).
7. T. M. Monro, D. J. Richardson, and P. J. Bennet, "Developing holey fibers for evanescent field devices," Electron. Lett., 35, 1188-1189 (1999).
8. N. G. R. Broderick, P. J. Bennett, T. M. Monro, and D. J. Richardson, *Holey optical.fibers,* **Patent No.** 6,577,801, United States of America, Jun. 2003.
9. Y. K. Lize, E. C. Magi, V. G. Ta'eed, J. A. Bolger, P. Steinvurzel, and B. J. Eggleton," Microstructured optical fiber photonic wires with subwavelength core diameter," Opt. Express, 12, 3209-3217 (2004).
10. E. C. Magi, H. C. Nguyen, and B. J. Eggleton, "Air-hole collapse and mode transitions in microstructured fiber photonic wires," Opt. Express, 13, 453-459 (2005).
11. J. Chandalia, D. J. DiGiovanni, B. J. Eggleton, S. G. Kosinski, R. S. Windeler, *Process for fabricating tapered microstructured fiber system and resultant system,* **Patent No.** 6,654,522, United States of America, Nov. 2003.
12. V. P. Minkovich, A. V. Kir'yanov, A. B. Sotsky, and L. I. Sotskaya, "Large-mode-area holey fibers with a few air channels in cladding: modeling and experimental investigation of modal properties," J. Opt. Soc. Am. B, 21, 1161-1169 (2004).
13. V. P. Minkovich, J. Villatoro, D. Monzón-Hernández, S. Calixto, A. B. Sotsky, and L. I. Sotskaya, "Holey fiber tapers with resonanse transmisión for high-resolution refractive index sensing," Opt. Express. 13, 7609-7614 (2005).
14. J. Villatoro, V. P. Minkovich, and D. Monzón-Hernández, "Temperature-independent strain sensor made of tapered holey optical fiber," Opt. Lett., 31, 305-307(2006).
15. V. P. Minkovich, D. Monzón-Hernández, J. Villatoro, A. B. Sotsky, and L. I. Sotskaya, "Modeling of holey fiber tapers with selective transmission for sensor applications," J. Lightw. Technol., (accepted in 2006 for publication).

## Claims

1. A method for monitoring strain-induced changes suffered by structure, materials or components using a single-material microstructured optical fiber tapered by a non-adiabatic process having gradually collapsed air channels, wherein the monitoring is temperature-independent in the range 0-180°C, comprising the following steps:
a) fix the fiber between two mechanical displacement mounts having calibrated micrometer screws;
b) stretch the fiber using the calibrated micrometer screws of the mounts;
c) obtain the normalized transmission spectra of the stretched taper at a certain wavelength;
d) remove the strain to allow all the peaks fo return to their baseline; and
e) monitor the shift of at least one of the peaks of the normalized spectra.

2. The method of claim 1, wherein the wavelength is selected from 1540 nm or 1290 nm.

3. The method of claims 1 or 2, wherein the strain is in the range 0-8,000 µε.

## Patentansprüche

1. Eine Methode für die Beobachtung von dehnungsbedingten Veränderungen in Strukturen, Werkstoffen oder Komponenten mittels einer mikrostrukturierten Einzetwerkstoffgiasfaser, die durch ein nicht adiabatisches Verfahren zugespitzt wird, mit stufenweise verdichteten Luftkanälen, in denen die Überwachung temperaturunabhängig im Bereich von 0-180 °C erfolgt, bestehend aus den folgenden Schritten:
a) Befestigen Sie die Faser zwischen zwei mechanisch verstellbaren Befestigungen, die über kalibrierte Mikrometerschrauben verfügen;
b) dehnen Sie die Faser mithiffe der kalibrierten Mikrometerschrauben der Befestigungen;
c) ermitteln Sie die normalisierten Übertragungsspektren der gedehnten Verjüngung bei einer bestimmten Wellenlänge;
d) nehmen Sie die Dehnung zurück, damit alle Spitzen zu ihrer Grundlinie zurückkehren; und
e) beobachten Sie die Verschiebung von mindestens einer der Spitzen der normalisierten Spektren:

2. Die Methode in Anspruch 1, worin die Wellenlänge aus 1540 nm oder 1290 nm ausgewählt wird.

3. Die Methode in Anspruch 1 oder 2, worin die Dehnung im Bereich 0-8000 µε liegt.

## Revendications

1. Une méthode permettant de contrôler les modifications dues aux contraintes subies par les structures, les matériaux ou les composants, qui utilise une fibre optique micro-structurée mono-matériel rendue conique grâce à un processus non-adiabatique avec des canaux d'air progressivement comprimés, pour laquelle le contrôle est indépendant de la température sur une plage de 0 à 180 °C, et comprenant les étapes suivantes :
a) fixer la fibre entre deux supports mécaniques de déplacement en ayant calibré les vis micrométriques ;
b) étirer la fibre à l'aide des vis micrométriques calibrées des supports ;
c) obtenir le spectre standard de transmission du « taper » conique étiré à une certaine longueur d'onde.
d) retirer la contrainte pour permettre à toutes les crêtes de retrouver leur niveau normal ; et
e) vérifier le basculement d'au moins une des crêtes du spectre standard.

2. La méthode de la revendication 1, où la longueur d'onde sera sélectionnée à 1540 nm ou 1290 nm.

3. La méthode des revendications 1 ou 2, où la contrainte se situe sur une plage 0-8000 µε.
